# EUROPEAN PATENT SPECIFICATION

(11) **EP 4 524 482 B1**
(45) Date of publication and mention of the grant of the patent: **12.08.2026**
(21) Application number: 23827246.2
(22) Date of filing: 21.06.2023
(51) Int. Cl.: F04B 39/00, F24F 1/12, F24F 1/40, F16F 15/02, G10K 11/168

(54) **COMPRESSING DEVICE AND VIBRATION ISOLATING MEMBER ATTACHMENT METHOD**
KOMPRESSIONSVORRICHTUNG UND BEFESTIGUNGSVERFAHREN FÜR SCHWINGUNGSISOLIERENDES ELEMENT
DISPOSITIF DE COMPRESSION, ET PROCÉDÉ DE FIXATION D'ÉLÉMENT D'ISOLATION DES VIBRATIONS

(30) Priority: 24.06.2022 JP 2022101835
(43) Date of publication of application: 19.03.2025
(73) Proprietor: MITSUBISHI HEAVY INDUSTRIES THERMAL SYSTEMS, LTD., Tokyo 100-8332 (JP)
(72) Inventor: YOSHIDA, Kento, Tokyo 100-8332 (JP); TAKEUCHI, Nobuyuki, Tokyo 100-8332 (JP); SASAKI, Takahiro, Tokyo 100-8332 (JP)
(74) Representative: Cabinet Beau de Loménie
(86) International application number: PCT/JP2023/022979
(87) International publication number: WO 2023/249063

(56) References cited:
- WO-A1-2020/178928
- CN-A- 105 698 283
- JP-A- 2010 038 460
- JP-A- H04 184 025
- JP-A- H04 184 025
- JP-A- H1 073 288
- JP-U- H0 525 224
- KR-B1- 100 762 267

## Description

### Technical Field

The present disclosure relates to a compressing device and a vibration isolating member attachment method.

### Background Art

In the related art, a compressor attachment device is known in which a sound and vibration isolating cover for accommodating a compressor and an accumulator is fixed to a bottom plate in order to prevent the compressor from colliding with other components and being damaged due to large vibrations or impacts during transport (for example, see PTL 1). In the attachment device disclosed in PTL 1, the compressor and the accumulator are fixed to a support plate to maintain a gap therebetween. The compressor and the accumulator are accommodated in the sound and vibration isolating cover to be sealed. In this way, the compressor is prevented from colliding with other components and being damaged. PTL 2 describes a compressor assembly, outdoor unit and air conditioner. PTL2 discloses soundproofing and cushioning materials partially surrounding a compressor. It does not disclose a full-height coverage from lower end to upper end, full circumferential contact with the compressor side surface and a gap-filling, sheet-shaped vibration isolating arrangement. The isolation member of PTL2 is described as tube shaped. PTL3 describes an air conditioner having soundproofing and cushioning effects of a compressor. PTL4 describes an outdoor unit and air conditioner equipped with same.

### Citation List

### Patent Literature

[PTL 1] Japanese Unexamined Patent Application Publication No. 8-36389
[PTL 2] Chinese Patent Application Publication No. 105 698 283
[PTL 3] Japanese Patent Application No. H04 184025
[PTL 4] International Patent Application No. WO 2020/178928

### Summary of Invention

### Technical Problem

However, in the attachment device disclosed in PTL 1, since a space is present outside the sound and vibration isolating cover, there is a possibility that the compressor will be displaced due to strong vibrations or impacts during transport of the compressor and stress will occur in a pipe connected to the compressor, resulting in damage of the pipe or the like.

The present disclosure has been made in view of these circumstances, and an object of the present disclosure is to provide a compressing device and a vibration isolating member attachment method that can appropriately prevent a refrigerant device including a compressor or a pipe connected to the refrigerant device from being damaged due to occurrence of stress in the refrigerant device or the pipe caused by displacement of the refrigerant device due to strong vibrations or impacts during transport.

### Solution to Problem

In order to achieve the object, according to the present disclosure, there is provided a compressing device as defined in claim 1.

In addition, according to the present disclosure, there is provided a vibration isolating member attachment method as defined in claim 5.

### Advantageous Effects of Invention

According to the present disclosure, it is possible to provide a compressing device and a vibration isolating member attachment method that can appropriately prevent a refrigerant device including a compressor or a pipe connected to the refrigerant device from being damaged due to occurrence of stress in the refrigerant device or the pipe caused by displacement of the refrigerant device due to strong vibrations or impacts during transport.

### Brief Description of Drawings

Fig. 1 is a front view illustrating an outdoor unit of an air conditioner according to a first embodiment of the present disclosure.
Fig. 2 is a plan view illustrating the outdoor unit of the air conditioner according to the first embodiment of the present disclosure.
Fig. 3 is a cross-sectional view illustrating the outdoor unit taken along a line A-A of Fig. 1 and illustrates a state in which vibration isolating members are attached.
Fig. 4 is a cross-sectional view illustrating the outdoor unit taken along the line A-A of Fig. 1 and illustrates a state in which the vibration isolating members are not attached.
Fig. 5 is a cross-sectional view illustrating the outdoor unit taken along the line A-A of Fig. 1 and illustrates a state in which a first vibration isolating member is attached.
Fig. 6 is a plan view illustrating the first vibration isolating member.
Fig. 7 is a cross-sectional view illustrating the first vibration isolating member taken along a line B-B of Fig. 6.
Fig. 8 is a cross-sectional view illustrating a state in which the first vibration isolating member is attached to a compressor and a main accumulator.
Fig. 9 is a front view illustrating a state in which the first vibration isolating member is attached to the compressor and the main accumulator.
Fig. 10 is a plan view illustrating a second vibration isolating member.
Fig. 11 is a cross-sectional view illustrating the second vibration isolating member taken along a line C-C of Fig. 10.
Fig. 12 is a cross-sectional view illustrating a state in which the second vibration isolating member is attached to a refrigerant device at a height at which a fixing member is disposed.
Fig. 13 is a cross-sectional view illustrating a state in which the second vibration isolating member is attached to the refrigerant device at a position lower than the height at which the fixing member is disposed.
Fig. 14 is a front view illustrating a state in which the second vibration isolating member is attached to the refrigerant device.
Fig. 15 is a cross-sectional view illustrating an outdoor unit according to a second embodiment of the present disclosure and illustrates a state in which vibration isolating members are attached.

### Description of Embodiments

### [First Embodiment]

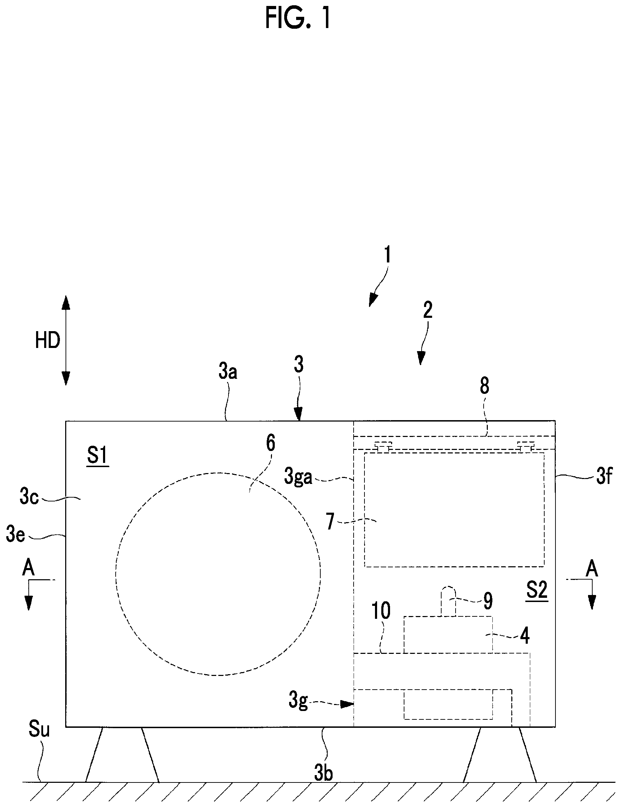

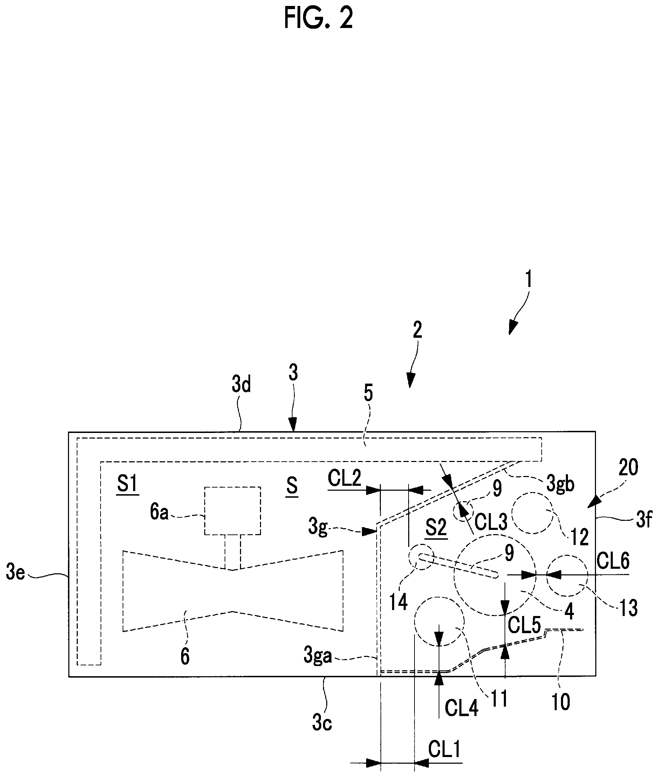

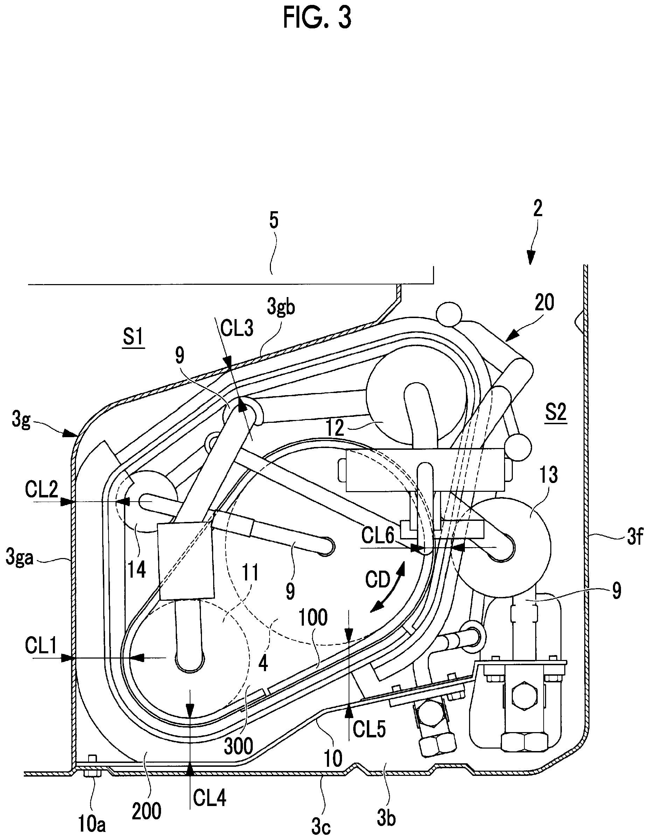

Hereinafter, an outdoor unit (compressing device) 2 of an air conditioner 1 according to a first embodiment of the present disclosure will be described with reference to the drawings. Fig. 1 is a front view illustrating the outdoor unit 2 of the air conditioner 1 according to the first embodiment of the present disclosure. Fig. 2 is a plan view illustrating the outdoor unit 2 of the air conditioner 1 according to the first embodiment of the present disclosure. In Fig. 1, a direction orthogonal to an installation surface Su is referred to as a height direction HD. Fig. 3 is a cross-sectional view illustrating the outdoor unit 2 taken along a line A-A of Fig. 1 and illustrates a state in which vibration isolating members (a first vibration isolating member 100, a second vibration isolating member 200, and a third vibration isolating member 300) are attached.

The air conditioner 1 according to the present embodiment includes a compressor 4 that compresses a refrigerant, a four-way switching valve (not illustrated) that switches a circulation direction of the refrigerant, an outdoor heat exchanger 5 that exchanges heat between the refrigerant and outside air, an expansion valve (not illustrated) that expands the refrigerant, and an indoor heat exchanger (not illustrated) that exchanges heat between the refrigerant and indoor air from an indoor fan (not illustrated) and has a refrigerant cycle which is a close cycle configured by connecting these devices with a refrigerant pipe 9. Various devices are accommodated in an indoor unit (not illustrated) or the outdoor unit 2.

As illustrated in Figs. 1 and 2, the outdoor unit 2 includes a housing 3, the compressor 4, the outdoor heat exchanger 5, a blower 6 that guides outside air to the outdoor heat exchanger 5, a control box 7, a support portion 8 that supports the control box 7 with respect to the housing 3, the refrigerant pipe 9, a fixing member (adjacent member) 10 that fixes the refrigerant pipe 9, a main accumulator 11, a sub-accumulator 12, and mufflers 13 and 14.

The housing 3 is a member having a substantially rectangular parallelepiped shape that configures an outer shell of the outdoor unit 2 and has a space S formed therein. The control box 7 is a member that accommodates an electrical component, such as an inverter, that controls the compressor 4 and the like. The fixing member 10 is a member that is disposed to be adjacent to the compressor 4 and fixes the refrigerant pipe 9 to the housing 3. Each of the portions constituting the outdoor unit 2 is disposed in the space S.

The housing 3 has a top panel 3a that defines an upper surface of the space S, a bottom panel 3b that defines a lower surface of the space S, a front panel 3c that defines a front surface (an end surface in one direction) of the space S, a rear panel 3d that defines a rear surface of the space S, a right panel 3e that defines a right surface of the space S, and a left panel 3f that defines a left surface of the space S. The housing 3 has a partition wall 3g that separates a heat exchanger room S1 in which the outdoor heat exchanger 5 and the like are disposed from a machine room S2 in which the compressor 4, the control box 7, and the like are disposed.

The compressor 4 is a device that is accommodated in the machine room S2 of the space S and is disposed at a position facing the front panel 3c. The compressor 4 compresses the refrigerant circulating in the refrigerant cycle and discharges the refrigerant to the refrigerant pipe. In Fig. 1, the illustration of other members disposed to be adjacent to the compressor 4 in the machine room S2 is omitted. In Fig. 2, the illustration of some devices disposed in the machine room S2 is omitted.

The front panel 3c is configured such that a portion or all of the front panel 3c is openable and closable. A discharge opening (not illustrated) through which the blower 6 discharges the outside air introduced into the outdoor unit 2 is formed in the front panel 3c. An introduction opening (not illustrated) for introducing the outside air into the outdoor unit 2 is formed in the rear panel 3d.

The partition wall 3g is a member that is formed in a substantially L-shape in a plan view and includes a first partition wall 3ga that extends from the inner surface of the front panel 3c toward the outdoor heat exchanger 5 and a second partition wall 3gb that extends from an end portion, which is closer to the outdoor heat exchanger 5, in the first partition wall 3ga toward the left panel 3f.

The heat exchanger room S1 has a space having a substantially L-shape in a plan view formed therein. In the heat exchanger room S1, the outdoor heat exchanger 5 having a substantially L-shape in a plan view is placed on the bottom panel 3b so as to follow the right panel 3e and the rear panel 3d. The blower 6 that guides the outside air to the outdoor heat exchanger 5 and an electric motor 6a that drives the blower 6 are disposed in the heat exchanger room S1.

The machine room S2 is a space partitioned by the front panel 3c, the left panel 3f, and the partition wall 3g. The compressor 4 is placed on the bottom panel 3b in the machine room S2. The support portion 8 supported by the first partition wall 3ga is provided in an upper portion of the machine room S2. The control box 7 is suspended from the support portion 8 and is supported by the support portion 8.

The refrigerant pipe 9 is a pipe for circulating the refrigerant through the refrigerant cycle. The refrigerant pipe 9 is a general term for the pipes provided in the machine room S2 in the outdoor unit 2. Figs. 1 and 2 illustrate the refrigerant pipe 9 that connects the compressor 4 and the muffler 14, but do not illustrate the other refrigerant pipes.

The fixing member 10 is a member for fixing the refrigerant pipe 9 to the housing 3. As illustrated in Fig. 3, one end of the fixing member 10 is fixed to the housing 3 by a fastening bolt 10a. As illustrated in Fig. 1, the other end of the fixing member 10 extends to the bottom panel 3b in the height direction HD and is fixed to the bottom panel 3b by a fastening bolt (not illustrated).

The main accumulator 11 and the sub-accumulator 12 are devices that are used to separate the refrigerant supplied to the compressor 4 into gas and liquid. As illustrated in Figs. 2 and 3, the main accumulator 11 is disposed between the compressor 4 and the first partition wall 3ga in a plan view of the outdoor unit 2. The sub-accumulator 12 is disposed between the compressor 4 and the second partition wall 3gb in the plan view of the outdoor unit 2.

The mufflers 13 and 14 are devices for reducing noise caused by the refrigerant circulated through the refrigerant pipe 9. As illustrated in Figs. 2 and 3, the muffler 13 is disposed between the compressor 4 and the left panel 3f in the plan view of the outdoor unit 2. The muffler 13 is disposed between the compressor 4 and the first partition wall 3ga in the plan view of the outdoor unit 2.

As illustrated in Figs. 2 and 3, the compressor 4, the main accumulator 11, the sub-accumulator 12, and the mufflers 13 and 14 are disposed in the machine room S2. The devices that are disposed in the machine room S2 to circulate the refrigerant are collectively referred to as a refrigerant device 20. The devices constituting the refrigerant device 20 are connected through the refrigerant pipe 9.

The partition wall 3g is attached to the housing 3 by fastening bolts (not illustrated). As illustrated in Figs. 2 and 3, the partition wall 3g is disposed to be adjacent to the main accumulator 11 with a gap CL1 interposed between the partition wall 3g and the main accumulator 11 constituting the refrigerant device 20 in a horizontal direction parallel to the installation surface Su. In addition, the partition wall 3g is disposed to be adjacent to the muffler 14 with a gap CL2 interposed between the partition wall 3g and the muffler 14 constituting the refrigerant device 20 in the horizontal direction. Further, the partition wall 3g is disposed to be adjacent to the refrigerant pipe 9 with a gap CL3 interposed between the partition wall 3g and the refrigerant pipe 9 constituting the refrigerant device 20 in the horizontal direction.

The fixing member 10 is attached to the housing 3 by the fastening bolt 10a. As illustrated in Figs. 2 and 3, the fixing member 10 is disposed to be adjacent to the main accumulator 11 with a gap CL4 interposed between the fixing member 10 and the main accumulator 11 constituting the refrigerant device 20 in the horizontal direction parallel to the installation surface Su.

In addition, the fixing member 10 is disposed to be adjacent to the compressor 4 with a gap CL5 interposed between the fixing member 10 and the compressor 4 constituting the refrigerant device 20 in the horizontal direction.

The muffler 13 is attached to the housing 3 through the refrigerant pipe 9 and the fixing member 10. As illustrated in Figs. 2 and 3, the muffler 13 is disposed to be adjacent to the compressor 4 with a gap CL6 interposed between the muffler 13 and the compressor 4 in the horizontal direction.

In the present embodiment, the first vibration isolating member 100 and the second vibration isolating member 200 are attached to the refrigerant device 20 in order to prevent the refrigerant device 20 or the refrigerant pipe 9 connected to the refrigerant device 20 from being damaged due to the occurrence of stress in the refrigerant device 20 or the refrigerant pipe 9 caused by the displacement of the refrigerant device 20 disposed in the machine room S2 due to strong vibrations or impacts during transport. The first vibration isolating member 100 is attached to the refrigerant device 20 so as to cover the entire periphery of a side surface of the compressor 4 along a circumferential direction CD. The second vibration isolating member 200 is attached to the refrigerant device 20 so as to fill up at least the gaps CL1, CL2, CL3, CL4, CL5, and CL6.

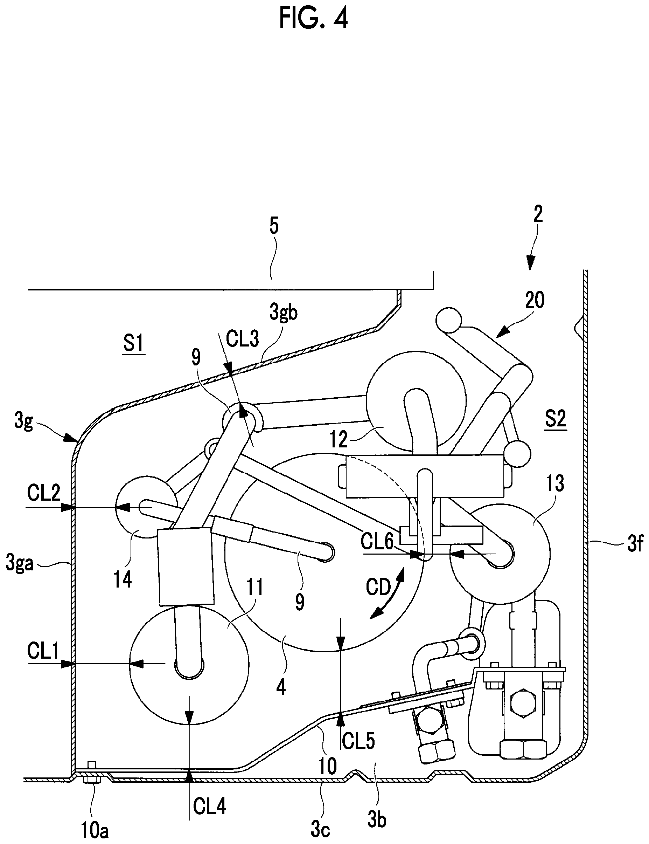

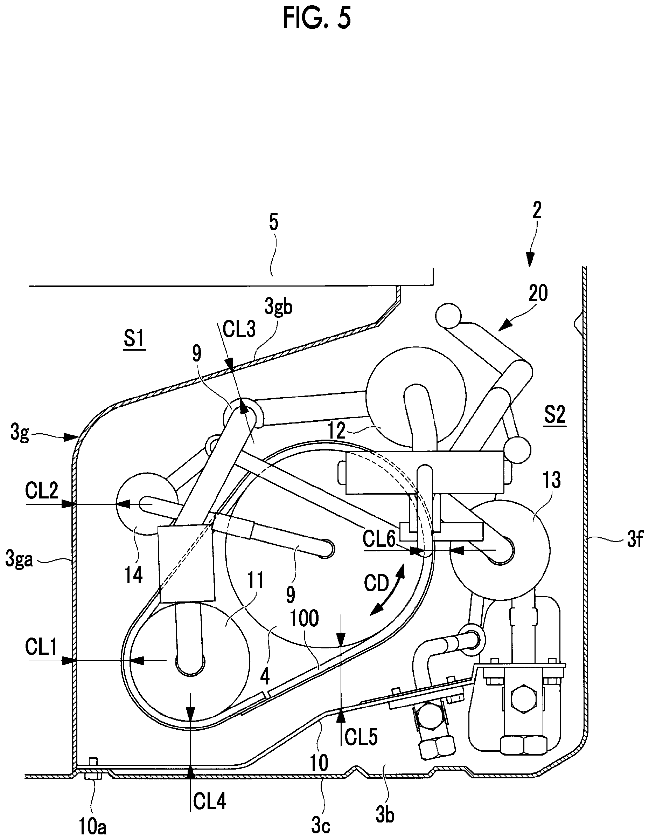

Next, the first vibration isolating member 100, the second vibration isolating member 200, and the third vibration isolating member 300 attached to the refrigerant device 20 according to the present embodiment will be described with reference to the drawings. Fig. 4 is a cross-sectional view illustrating the outdoor unit 2 taken along the line A-A of Fig. 1 and illustrates a state in which the vibration isolating members (the first vibration isolating member 100, the second vibration isolating member 200, and the third vibration isolating member 300) are not attached. Fig. 5 is a cross-sectional view illustrating the outdoor unit taken along the line A-A of Fig. 1 and illustrates a state in which the first vibration isolating member 100 is attached.

When the first vibration isolating member 100, the second vibration isolating member 200, and the third vibration isolating member 300 are attached to the refrigerant device 20 according to the present embodiment, the following procedure is performed. First, the first vibration isolating member 100 is attached to an area from a lower end to an upper end of the refrigerant device 20 in the height direction so as to cover the entire periphery of the compressor 4 and the main accumulator 11 in the state illustrated in Fig. 4 (first attachment step). In this way, the first vibration isolating member 100 is brought into contact with at least a portion of the side surfaces of the compressor 4 and the main accumulator 11. In this step, the first vibration isolating member 100 is attached in a state of not being in contact with the partition wall 3g and the fixing member 10.

Second, the second vibration isolating member 200 is attached to at least a portion of the area from the lower end to the upper end of the refrigerant device 20 in the height direction HD so as to cover the entire periphery of the first vibration isolating member 100 in the state illustrated in Fig. 5 (second attachment step). In this way, the second vibration isolating member 200 is brought into contact with at least a portion of the first vibration isolating member 100.

At this time, the second vibration isolating member 200 is attached so as to fill up the gaps CL1, CL2, and CL3 together with the first vibration isolating member 100 in a state of being in contact with both the first vibration isolating member 100 and the partition wall 3g. In addition, the second vibration isolating member 200 is attached so as to fill up the gaps CL4 and CL5 together with the first vibration isolating member 100 in a state of being in contact with both the first vibration isolating member 100 and the fixing member 10. Further, the second vibration isolating member 200 is attached so as to fill up the gap CL6 together with the first vibration isolating member 100 in a state of being in contact with both the first vibration isolating member 100 and the muffler 13.

Third, the third vibration isolating member 300 is disposed so as to seal the upper sides of the compressor 4 and the main accumulator 11 covered with the first vibration isolating member 100. The lower sides of the compressor 4 and the main accumulator 11 are covered with the bottom panel 3b, the sides thereof are covered with the first vibration isolating member and the second vibration isolating member 200, and the upper sides thereof are covered with the third vibration isolating member 300 by disposing the third vibration isolating member 300. The third vibration isolating member 300 is made of, for example, felt obtained by compressing animal fibers or other fibers into a sheet shape. The state illustrated in Fig. 3 is set by performing the above-described work.

The first vibration isolating member 100, the second vibration isolating member 200, and the third vibration isolating member 300 according to the present embodiment may be attached only during the transport of the outdoor unit 2 or may be attached not only during the transport of the outdoor unit 2 but also during the operation after the installation of the outdoor unit 2. Since the first vibration isolating member 100, the second vibration isolating member 200, and the third vibration isolating member 300 are attached to the refrigerant device 20 during the operation of the outdoor unit 2, it is possible to appropriately suppress the vibration and noise of the refrigerant device 20.

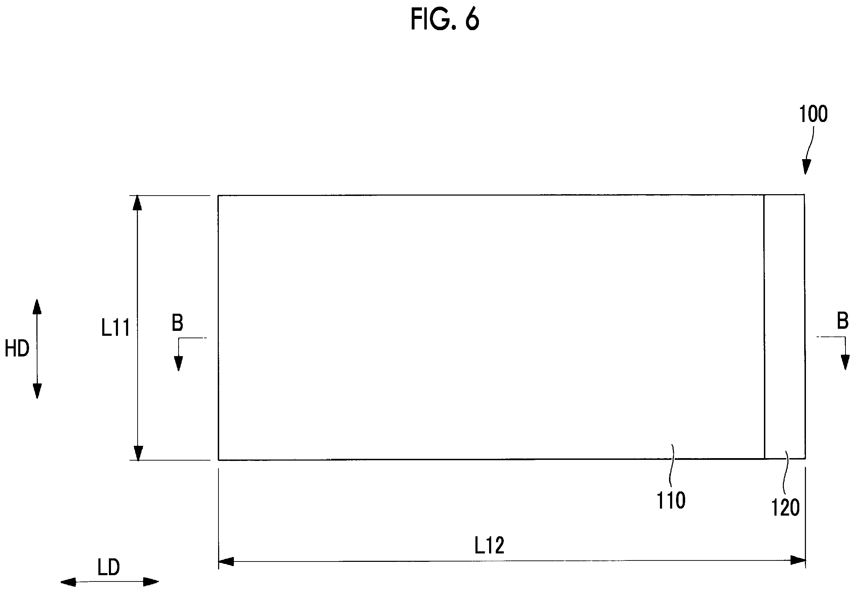

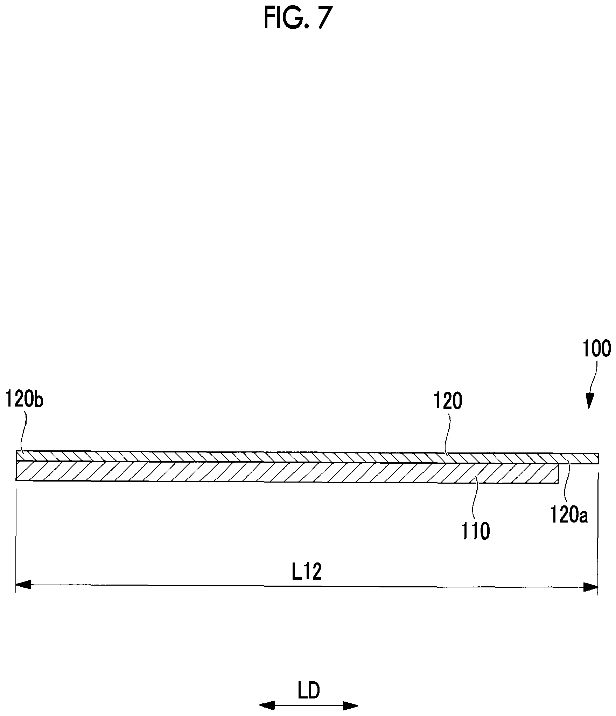

Next, a detailed configuration of the first vibration isolating member 100 will be described with reference to the drawings. Fig. 6 is a plan view illustrating the first vibration isolating member 100. Fig. 7 is a cross-sectional view illustrating the first vibration isolating member 100 taken along a line B-B of Fig. 6. As illustrated in Fig. 6, the first vibration isolating member 100 is a member formed in a long shape in which a length L12 in a longitudinal direction LD is larger than a length L11 in the height direction HD. As illustrated in Fig. 7, the first vibration isolating member 100 is configured by laminating a first inner layer 110 and a first outer layer 120. The first inner layer 110 and the first outer layer 120 are joined to each other by, for example, an adhesive.

The first inner layer 110 is a member that is disposed in contact with the compressor 4 and the main accumulator 11. The first outer layer 120 is a member that is disposed in contact with the first inner layer 110 and the second vibration isolating member 200. As illustrated in Fig. 7, the length of the first inner layer 110 in the longitudinal direction LD is smaller than the length of the first outer layer 120 in the longitudinal direction LD. This is for joining a first end portion 120a of the first outer layer 120 in the longitudinal direction LD and a second end portion 120b of the first outer layer 120 in the longitudinal direction LD with an adhesive or the like.

The first inner layer 110 is made of, for example, felt obtained by compressing animal fibers or other fibers into a sheet shape. The first outer layer 120 is made of a material (for example, a rubber material) that exhibits high sound insulation properties. The first inner layer 110 may be made of another member having a lower rigidity than the rubber material. In addition, a modification example may be adopted in which the first inner layer 110 is made of a rubber material and the first outer layer 120 is made of another material having a lower rigidity than the rubber material.

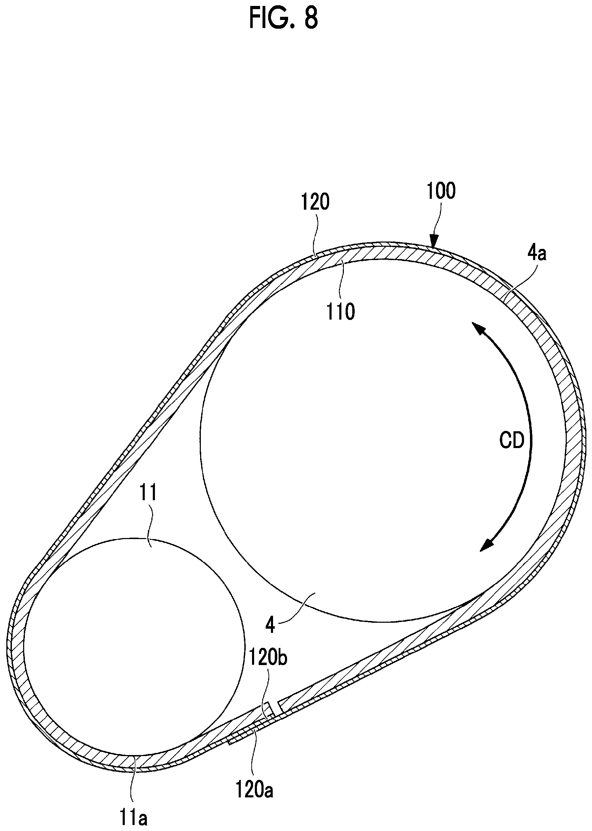

Fig. 8 is a cross-sectional view illustrating a state in which the first vibration isolating member 100 is attached to the compressor 4 and the main accumulator 11. As illustrated in Fig. 8, the first vibration isolating member 100 is disposed so as to cover the compressor 4 and the main accumulator 11 along the circumferential direction CD in a state of being in contact with a portion of a side surface 4a of the compressor 4 and a portion of a side surface 11a of the main accumulator 11. The first end portion 120a of the first outer layer 120 in the longitudinal direction LD and the second end portion 120b of the first outer layer 120 in the longitudinal direction LD are joined with an adhesive or the like to maintain the state in which the first vibration isolating member 100 covers the compressor 4 and the main accumulator 11.

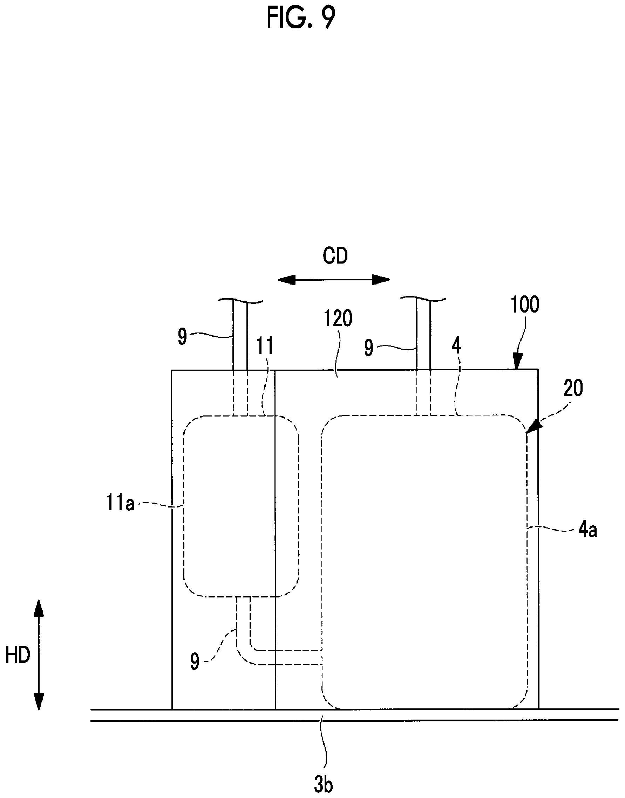

Fig. 9 is a front view illustrating a state in which the first vibration isolating member 100 is attached to the compressor 4 and the main accumulator 11. As illustrated in Fig. 9, the first vibration isolating member 100 is disposed in an area from the lower ends to the upper ends of the compressor 4 and the main accumulator 11 in the height direction HD.

As illustrated in Fig. 5, the first vibration isolating member 100 is disposed so as not to come into contact with the partition wall 3g, the fixing member 10, the refrigerant pipe 9, and the muffler 14 disposed adjacent thereto in a state in which the first vibration isolating member 100 is attached to the compressor 4 and the main accumulator 11. Since there are sufficient spaces in the gap CL1 between the main accumulator 11 and the partition wall 3g, the gap CL2 between the muffler 14 and the partition wall 3g, the gap CL3 between the refrigerant pipe 9 and the partition wall 3g, the gap CL4 between the main accumulator 11 and the fixing member 10, the gap CL5 between the compressor 4 and the fixing member 10, and the gap CL6 between the compressor 4 and the muffler 13, it is possible to relatively easily attach the first vibration isolating member 100 to the compressor 4 and the main accumulator 11.

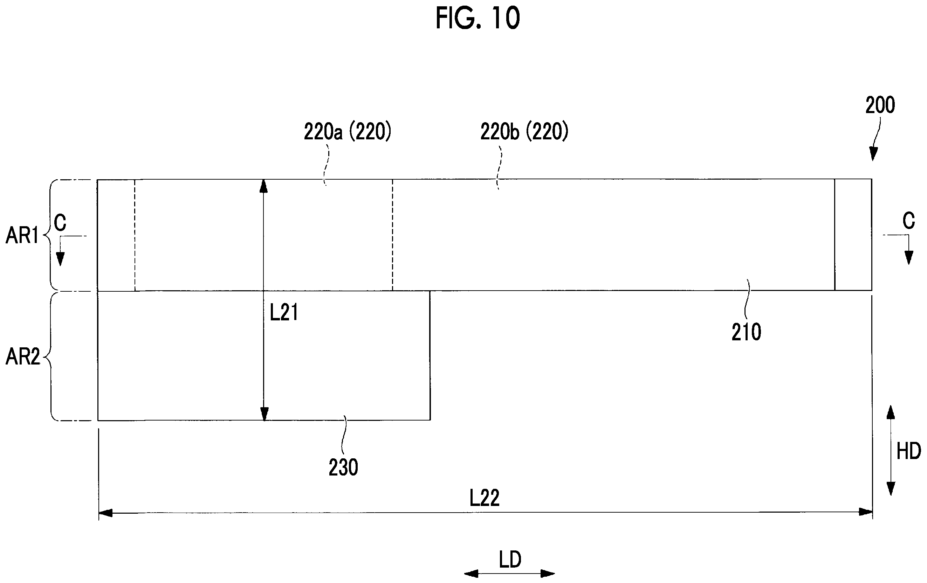

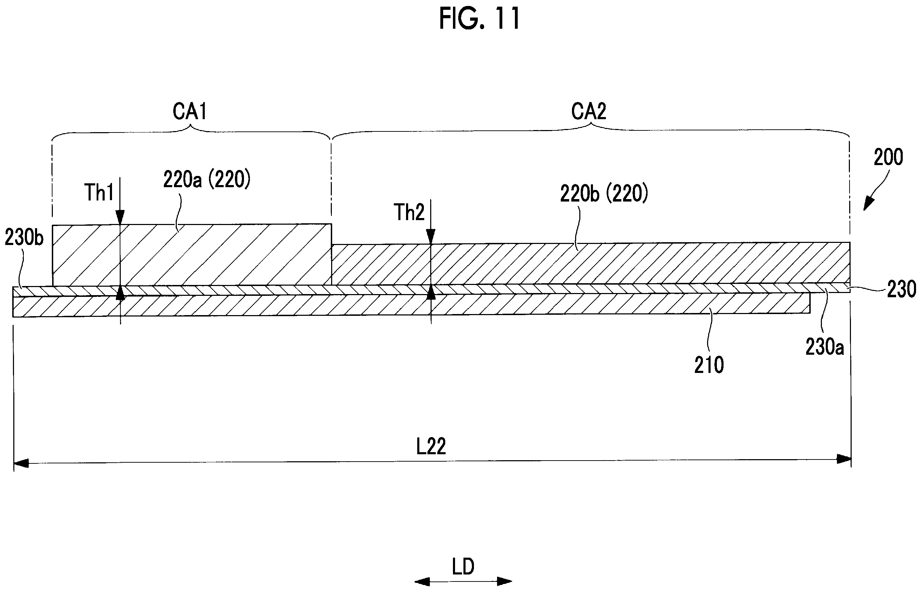

Next, a detailed configuration of the second vibration isolating member 200 will be described with reference to the drawings. Fig. 10 is a plan view illustrating the second vibration isolating member 200. Fig. 11 is a cross-sectional view illustrating the second vibration isolating member 200 taken along a line C-C of Fig. 10. As illustrated in Fig. 10, the second vibration isolating member 200 is a member formed in a long shape in which a length L22 in the longitudinal direction LD is larger than a length L21 in the height direction HD.

As illustrated in Fig. 11, the second vibration isolating member 200 is configured by laminating a second inner layer 210, a second outer layer 220, and an intermediate layer 230 interposed between the second inner layer 210 and the second outer layer 220. The second inner layer 210 and the intermediate layer 230 are joined to each other by, for example, an adhesive, and the second outer layer 220 and the intermediate layer 230 are joined to each other by, for example, the adhesive.

The second inner layer 210 is a member that is disposed in contact with the first vibration isolating member 100. The second outer layer 220 is a member that is disposed in contact with the second inner layer 210 and other adjacent members (for example, the partition wall 3g and the fixing member 10). As illustrated in Fig. 11, the length of the second inner layer 210 in the longitudinal direction LD is smaller than the length L22 of the intermediate layer 230 in the longitudinal direction LD. This is for joining a first end portion 230a of the intermediate layer 230 in the longitudinal direction LD and a second end portion 230b of the intermediate layer 230 in the longitudinal direction LD.

For example, surface fasteners are attached to the first end portion 230a and the second end portion 230b. Since the first end portion 230a and the second end portion 230b are joined to each other by the surface fasteners, it is possible to appropriately switch between a state in which the first end portion 230a and the second end portion 230b are joined to each other and a state in which the first end portion 230a and the second end portion 230b are not joined to each other and thus to easily attach and detach the second vibration isolating member 200.

The second inner layer 210 and the second outer layer 220 are made of, for example, felt obtained by compressing animal fibers or other fibers into a sheet shape. The intermediate layer 230 is made of a material (for example, a resin material such as vinyl chloride) having a higher rigidity than the second inner layer 210 and the second outer layer 220. The second inner layer 210 and the second outer layer 220 may be made of other members having a lower rigidity than the intermediate layer 230.

As illustrated in Fig. 11, the second outer layer 220 of the second vibration isolating member 200 includes a first member 220a having a first thickness Th1 and a second member 220b having a second thickness Th2 smaller than the first thickness Th1. In the second outer layer 220, the first thickness Th1 in a first circumferential direction area CA1 and the second thickness Th2 in a second circumferential direction area CA2 different from the first circumferential direction area CA1 in the circumferential direction CD surrounding the side surface of the refrigerant device 20 are different from each other in a state in which the second outer layer 220 is not disposed in the gaps CL1, CL2, CL3, CL4, CL5, and CL6.

For example, the first thickness Th1 and the second thickness Th2 of the second vibration isolating member 200 are adjusted such that the rigidity of the second vibration isolating member 200 in the first circumferential direction area CA1 is higher than the rigidity of the second vibration isolating member 200 in the second circumferential direction area CA2 in a state in which the second vibration isolating member 200 is attached to achieve a state suitable for reducing the rigidity of other adjacent members or a vibration frequency of the compressor. Further, a modification example may be adopted in which the second outer layer 220 of the second vibration isolating member 200 is configured to have the same thickness in the entire area in the circumferential direction CD.

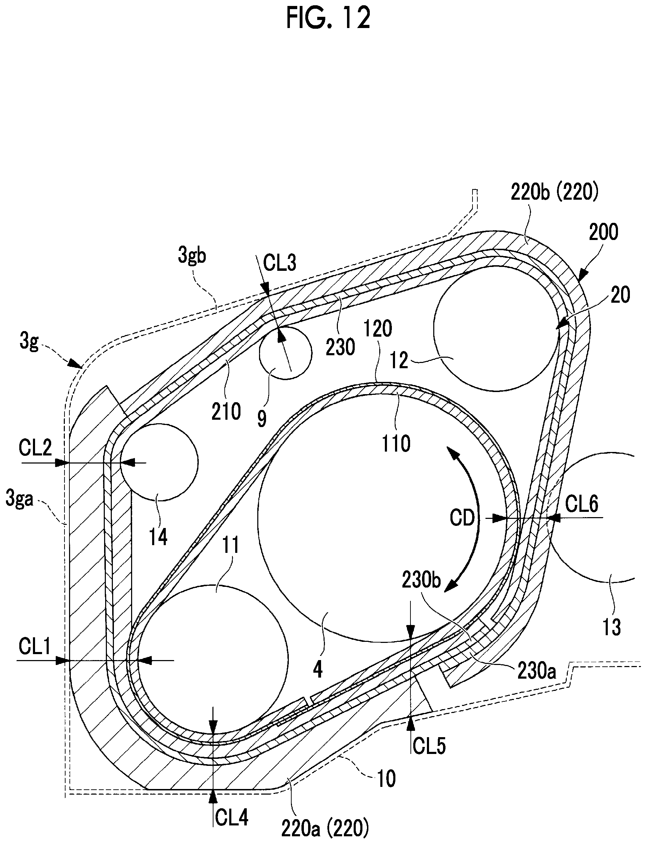

Fig. 12 is a cross-sectional view illustrating a state in which the second vibration isolating member 200 is attached to the refrigerant device 20 at a height at which the fixing member 10 is disposed. As illustrated in Fig. 12, the second vibration isolating member 200 is disposed so as to cover the entire periphery of the first vibration isolating member 100 along the circumferential direction CD in a state of being in contact with a portion of the first vibration isolating member 100. The first end portion 230a of the intermediate layer 230 in the longitudinal direction LD and the second end portion 230b of the intermediate layer 230 in the longitudinal direction LD are joined to maintain the state in which the second vibration isolating member 200 covers the first vibration isolating member 100.

As illustrated in Fig. 12, the second vibration isolating member 200 is disposed so as to fill up the gaps CL1, CL2, and CL3 together with the first vibration isolating member 100 in a state of being in contact with both the first vibration isolating member 100 and the partition wall 3g. In addition, the second vibration isolating member 200 is disposed so as to fill up the gaps CL4 and CL5 together with the first vibration isolating member 100 in a state of being in contact with both the first vibration isolating member 100 and the fixing member 10. Further, the second vibration isolating member 200 is disposed so as to fill up the gap CL6 together with the first vibration isolating member 100 in a state of being in contact with both the first vibration isolating member 100 and the muffler 13.

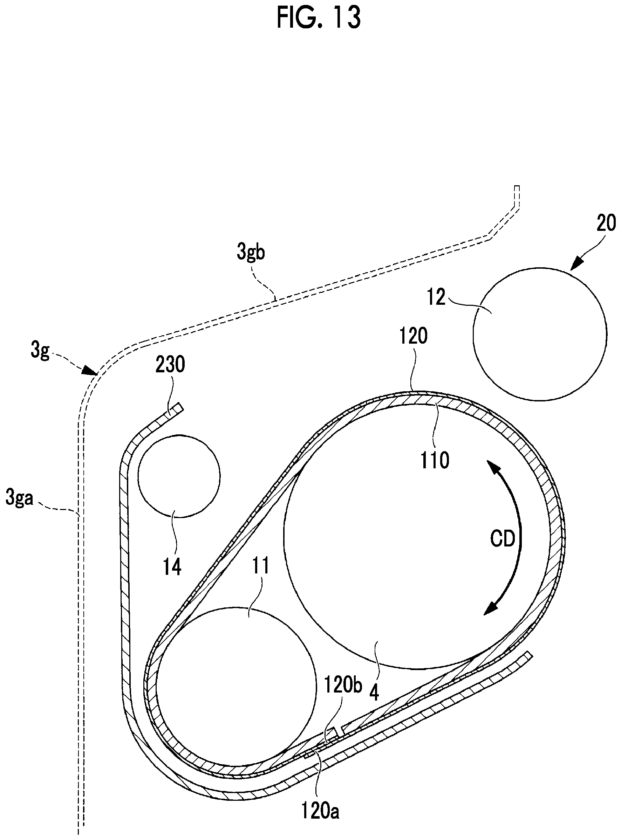

Fig. 13 is a cross-sectional view illustrating a state in which the second vibration isolating member 200 is attached to the refrigerant device 20 at a position lower than the height at which the fixing member 10 is disposed. As illustrated in Fig. 13, the intermediate layer 230 of the second vibration isolating member 200 is disposed so as to cover only a partial area, which is closer to the front panel 3c, in the entire periphery of the first vibration isolating member 100 at the position lower than the height at which the fixing member 10 is disposed.

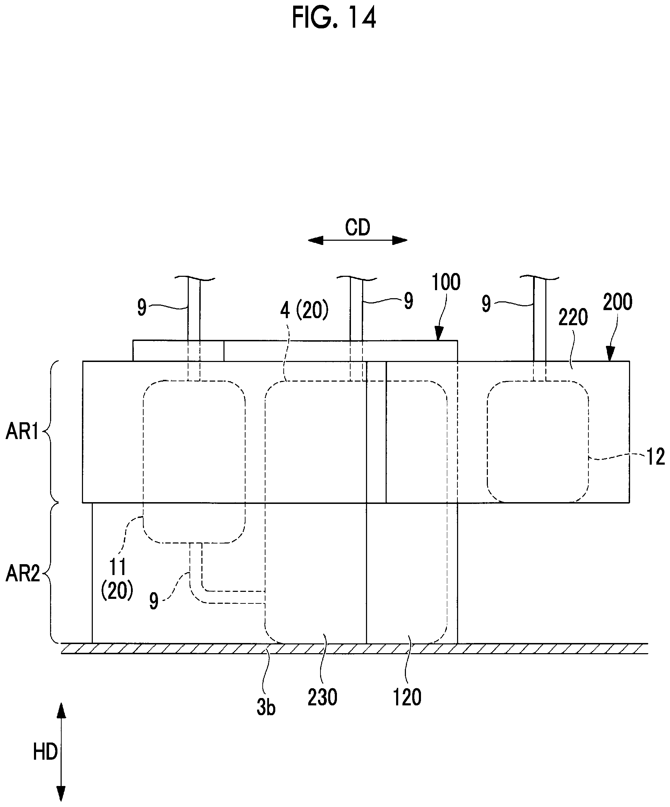

Fig. 14 is a front view illustrating a state in which the second vibration isolating member 200 is attached to the refrigerant device 20. As illustrated in Fig. 14, the second vibration isolating member 200 is disposed in a portion of the area from the lower end to the upper end of the refrigerant device 20 in the height direction HD. As illustrated in Figs. 10 and 14, the second inner layer 210 and the second outer layer 220 are disposed in a first area AR1, which is a partial area in the height direction HD, so as to cover the entire periphery of the side surface of the refrigerant device 20, with the intermediate layer 230 interposed therebetween. The intermediate layer 230 is disposed in a second area AR2 from the lower end of the refrigerant device 20 in the height direction HD to the first area AR1 so as to cover only a portion of the side surface of the refrigerant device 20.

The reason why the intermediate layer 230 of the second vibration isolating member 200 is disposed so as to cover only a partial area closer to the front panel 3c is that, when the entire periphery of the first vibration isolating member 100 is covered with the second vibration isolating member 200, it is difficult to perform the work of attaching the second vibration isolating member 200. In addition, the reason is that, even when the intermediate layer 230 of the second vibration isolating member 200 does not cover the entire periphery of the first vibration isolating member 100, the intermediate layer 230 of the second vibration isolating member 200 can come into contact with the bottom panel 3b to reliably fix the position of the second vibration isolating member 200 in the height direction HD.

As illustrated in Fig. 10, in the second vibration isolating member 200, the position of an end portion of the second area AR2 in the longitudinal direction LD in the height direction HD of the intermediate layer 230 is different from the position of an end portion of the first area AR1 in the longitudinal direction LD in the height direction HD of the first member 220a of the second outer layer 220. This is because a boundary between the first member 220a and the second member 220b is not disposed at the same position as the end portion of the second area AR2 in the height direction HD of the intermediate layer 230. The end portion of the second area AR2 in the height direction HD of the intermediate layer 230 is a stress concentration point. Therefore, when the boundary is not disposed at this point, it is possible to suppress the deformation or damage of the intermediate layer 230 due to stress concentration.

The outdoor unit 2 according to the present embodiment described above has the following operation and effect.

According to the outdoor unit 2 of the present embodiment, the first vibration isolating member 100 is disposed in the area from the lower end to the upper end of the refrigerant device 20 in the height direction HD so as to cover the entire periphery of the side surface of the refrigerant device 20 in a state of being in contact with at least a portion of the side surface of the refrigerant device 20. Therefore, it is possible to appropriately prevent vibrations and noise during the operation of the refrigerant device 20 including the compressor 4 from being transmitted to the outside.

In addition, according to the outdoor unit 2 of the present embodiment, the second vibration isolating member 200 is disposed in at least a portion of the area from the lower end to the upper end in the height direction HD so as to cover the entire periphery of the first vibration isolating member 100 in a state of being in contact with at least a portion of the first vibration isolating member 100. The second vibration isolating member 200 is disposed so as to fill up the gaps CL1, CL2, CL3, CL4, CL5, and CL6 between the refrigerant device 20 and adjacent members together with the first vibration isolating member 100 in a state of being in contact with both the first vibration isolating member 100 and the adjacent members (the partition wall 3g and the fixing member 10). The gaps between the refrigerant device 20 and the adjacent members are filled with the first vibration isolating member 100 and the second vibration isolating member 200. Therefore, it is possible to appropriately prevent the refrigerant device 20 including the compressor 4 or the pipe connected to the refrigerant device 20 from being damaged due to the occurrence of stress in the refrigerant device 20 or the pipe caused by the displacement of the refrigerant device 20 due to strong vibrations or impacts during transport.

According to the outdoor unit 2 of the present embodiment, in the second vibration isolating member 200, the first thickness Th1 in the first circumferential direction area CA1 and the second thickness Th2 in the second circumferential direction area CA2 in the circumferential direction CD are different from each other. Therefore, the second vibration isolating member 200 can have an appropriate thickness according to, for example, the distances of the gaps in the first circumferential direction area CA1 and the second circumferential direction area CA2 when the second vibration isolating member 200 is attached or the rigidity of adjacent members in the first circumferential direction area CA1 and the second circumferential direction area CA2. For example, the thickness of the second vibration isolating member 200 can be adjusted such that the rigidity of the second vibration isolating member 200 in the first circumferential direction area CA1 is higher than the rigidity of the second vibration isolating member 200 in the second circumferential direction area CA2 in a state in which the second vibration isolating member 200 is attached to achieve a state suitable for reducing the rigidity of adjacent members or the vibration frequency of the compressor 4.

According to the outdoor unit 2 of the present embodiment, one of the first inner layer 110 and the first outer layer 120 of the first vibration isolating member 100 is made of the rubber material. Therefore, it is possible to sufficiently ensure the vibration isolation performance and the sound insulation performance. In addition, the other of the first inner layer 110 and the first outer layer 120 of the first vibration isolating member 100 is made of a member having a lower rigidity than the rubber material. Therefore, it is possible to appropriately absorb the external force applied to the refrigerant device 20 including the compressor 4 due to strong vibrations or impacts.

According to the outdoor unit 2 of the present embodiment, the second inner layer 210 and the second outer layer 220 of the second vibration isolating member 200 are disposed in the first area AR1, which is a partial area of the refrigerant device 20 in the height direction HD, so as to cover the entire periphery of the side surface of the refrigerant device 20 with the intermediate layer 230 interposed therebetween. Since the entire periphery of the side surface of the refrigerant device 20 is covered with the second vibration isolating member 200, it is possible to reliably prevent a space from being formed in the gaps between the side surface of the refrigerant device 20 and adjacent members.

According to a vibration isolating member attachment method of the present embodiment, the first vibration isolating member is attached to the area from the lower end to the upper end of the refrigerant device 20 in the height direction HD so as to cover the entire periphery of the side surface of the refrigerant device 20 in a state of being in contact with at least a portion of the side surface of the refrigerant device 20. Therefore, it is possible to appropriately prevent the vibration and noise during the operation of the refrigerant device including the compressor from being transmitted to the outside.

In addition, according to a vibration isolating member attachment method of the present embodiment, the second vibration isolating member 200 is attached to at least a portion of the area from the lower end to the upper end of the refrigerant device in the height direction so as to cover the entire periphery of the first vibration isolating member in a state of being in contact with at least a portion of the first vibration isolating member. The second vibration isolating member 200 is attached so as to fill up the gaps CL1, CL2, CL3, CL4, CL5, and CL6 between the side surface of the refrigerant device 20 and adjacent members together with the first vibration isolating member 100 in a state of being in contact with both the first vibration isolating member 100 and the adjacent members. Since the gaps between the side surface of the refrigerant device 20 and the adjacent members are filled with the first vibration isolating member 100 and the second vibration isolating member 200, it is possible to appropriately prevent the refrigerant device 20 including the compressor or the pipe connected to the refrigerant device 20 from being damaged due to the occurrence of stress in the refrigerant device 20 or the pipe caused by the displacement of the refrigerant device 20 due to strong vibrations or impacts during transport.

### [Second Embodiment]

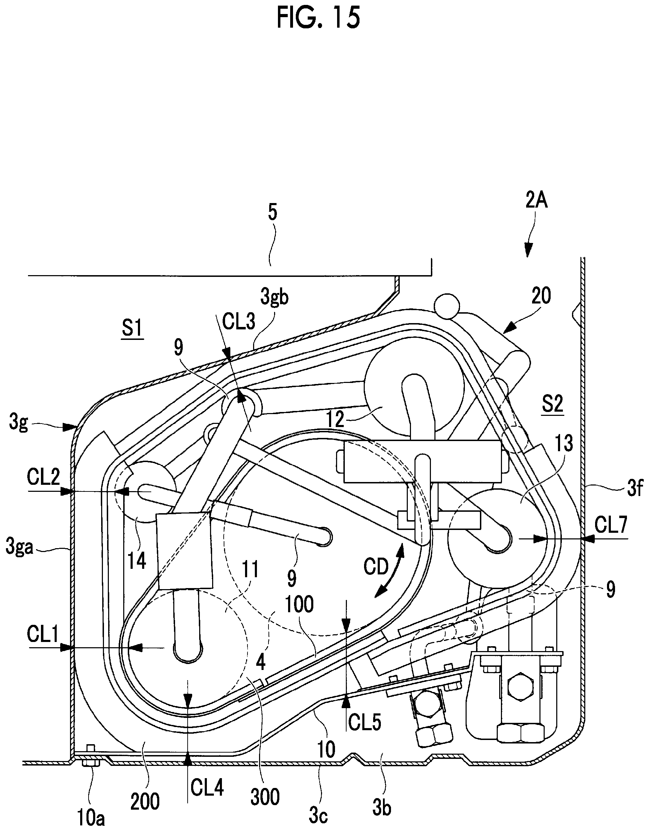

Next, an outdoor unit 2A of an air conditioner according to a second embodiment of the present disclosure will be described with reference to the drawings. Fig. 15 is a cross-sectional view illustrating the outdoor unit 2A according to the second embodiment of the present disclosure and illustrates a state in which vibration isolating members (the first vibration isolating member 100, the second vibration isolating member 200, and the third vibration isolating member 300) are attached.

In the outdoor unit 2 according to the first embodiment, the first vibration isolating member 100 and the second vibration isolating member 200 are disposed so as to fill up the gap CL6 between the compressor 4 and the muffler 13. In contrast, in the outdoor unit 2A according to the present embodiment, the first vibration isolating member 100 and the second vibration isolating member 200 are disposed so as to fill up a gap CL7 between the muffler 13 and the left panel 3f.

As illustrated in Fig. 15, in the outdoor unit 2A according to the present embodiment, the first vibration isolating member 100 and the second vibration isolating member 200 are disposed so as to fill up the gap CL7 between the muffler 13 and the left panel 3f. Since the left panel 3f is a member constituting a portion of the housing 3, it is possible to reliably transmit the vibration of the refrigerant device 20 to the left panel 3f through the muffler 13 and to absorb the vibration of the refrigerant device 20.

As illustrated in Fig. 15, according to the outdoor unit 2A of the present embodiment, the vibration of the refrigerant device 20 in a left-right direction in Fig. 15 is transmitted to the left panel 3f and the partition wall 3g. Therefore, the vibration in the left-right direction can be reliably absorbed by the housing 3. In addition, according to the outdoor unit 2A of the present embodiment, the vibration of the refrigerant device 20 in a front-rear direction in Fig. 15 is transmitted to the fixing member 10 and the partition wall 3g. Therefore, the vibration in the front-rear direction can be reliably absorbed by the housing 3.

For example, the compressing device (2) according to each of the above-described embodiments is understood as follows.

According to a first aspect of the present disclosure, there is provided a compressing device including: a housing (3) which has a space (S) formed therein and in which a panel (3c) defining an end surface of the space in one direction is openable and closable; a refrigerant device (20) that is accommodated in the space, is disposed at a position facing the panel, and includes a compressor (4) compressing a refrigerant; an adjacent member (3g or 10) that is attached to the housing and is disposed to be adjacent to the refrigerant device with a gap (CL1, CL2, or CL3) interposed between the adjacent member and the refrigerant device in a horizontal direction; a first vibration isolating member (100) that is disposed in an area from a lower end to an upper end of the compressor in a height direction (HD) so as to cover an entire periphery of the compressor in a state of being in contact with at least a portion of a side surface of the compressor; and a second vibration isolating member (200) that is disposed in at least a portion of an area from a lower end to an upper end of the refrigerant device in the height direction so as to cover an entire periphery of the first vibration isolating member in a state of being in contact with at least a portion of the first vibration isolating member. The first vibration isolating member is disposed in a state of not being in contact with the adjacent member, and the second vibration isolating member is disposed so as to fill up the gap together with the first vibration isolating member in a state of being in contact with both the first vibration isolating member and the adjacent member.

According to the compressing device of the first aspect of the present disclosure, the first vibration isolating member is disposed in the area from the lower end to the upper end of the compressor in the height direction so as to cover the entire periphery of the compressor in a state of being in contact with at least a portion of the side surface of the compressor. Therefore, it is possible to appropriately prevent vibrations and noise during the operation of the compressor from being transmitted to the outside.

In addition, according to the compressing device of the first aspect of the present disclosure, the second vibration isolating member is disposed in at least a portion of the area from the lower end to the upper end in the height direction so as to cover the entire periphery of the first vibration isolating member in a state of being in contact with at least a portion of the first vibration isolating member. The second vibration isolating member is disposed so as to fill up the gap between the refrigerant device and the adjacent member together with the first vibration isolating member in a state of being in contact with both the first vibration isolating member and the adjacent member. Since the gap between the refrigerant device and the adjacent member is filled with the first vibration isolating member and the second vibration isolating member, it is possible to appropriately prevent the refrigerant device including the compressor or the pipe connected to the refrigerant device from being damaged due to the occurrence of stress in the refrigerant device or the pipe caused by the displacement of the refrigerant device due to strong vibrations or impacts during transport.

According to a second aspect of the present disclosure, the compressing device according to the first aspect further includes the following configuration. That is, in the second vibration isolating member, a first thickness (Th1) in a first circumferential direction area (CA1) in a circumferential direction surrounding a side surface of the refrigerant device is different from a second thickness (Th2) in a second circumferential direction area (CA2) different from the first circumferential direction area in a state in which the second vibration isolating member is not disposed in the gap.

According to the compressing device of the second aspect of the present disclosure, the first thickness in the first circumferential direction area and the second thickness in the second circumferential direction area in the circumferential direction of the second vibration isolating member are different from each other. Therefore, the second vibration isolating member can have an appropriate thickness according to, for example, the distances of the gaps in the first circumferential direction area and the second circumferential direction area when the second vibration isolating member is attached or the rigidity of the adjacent member in the first circumferential direction area and the second circumferential direction area. For example, the thickness of the second vibration isolating member can be adjusted such that the rigidity of the second vibration isolating member in the first circumferential direction area is higher than the rigidity of the second vibration isolating member in the second circumferential direction area in a state in which the second vibration isolating member is attached to achieve a state suitable for reducing the rigidity of the adjacent member or the vibration frequency of the compressor.

According to a third aspect of the present disclosure, the compressing device according to the first or second aspect further includes the following configuration. That is, the first vibration isolating member is configured by laminating a first inner layer (110) that is disposed in contact with the refrigerant device and a first outer layer (120) that is disposed in contact with the first inner layer and the second vibration isolating member. One of the first inner layer and the first outer layer is made of a rubber material, and the other of the first inner layer and the first outer layer is made of a member having a lower rigidity than the rubber material.

According to the compressing device of the third aspect of the present disclosure, since one of the first inner layer and the first outer layer of the first vibration isolating member is made of the rubber material, it is possible to sufficiently ensure the vibration isolation performance and the sound insulation performance. In addition, since the other of the first inner layer and the first outer layer of the first vibration isolating member is made of the member having a lower rigidity than the rubber material, it is possible to appropriately absorb the external force applied to the refrigerant device including the compressor due to strong vibrations or impacts.

According to a fourth aspect of the present disclosure, the compressing device according to any one of the first to third aspects further includes the following configuration. That is, the second vibration isolating member is configured by laminating a second inner layer (210) that is disposed in contact with the first vibration isolating member, a second outer layer (220) that is disposed in contact with the adjacent member, and an intermediate layer (230) that is interposed between the second inner layer and the second outer layer. The second inner layer and the second outer layer are disposed in a first area (AR1), which is a partial area of the refrigerant device in the height direction, so as to cover the entire periphery of the side surface of the refrigerant device, with the intermediate layer interposed therebetween. The intermediate layer has a higher rigidity than the second inner layer and the second outer layer and is disposed in a second area (AR2) from a lower end of the refrigerant device in the height direction to the first area so as to cover only a portion of the side surface of the compressor.

According to the compressing device of the fourth aspect of the present disclosure, the second inner layer and the second outer layer of the second vibration isolating member are disposed in the first area, which is a partial area of the refrigerant device in the height direction, so as to cover the entire periphery of the side surface of the refrigerant device with the intermediate layer interposed therebetween. Since the entire periphery of the side surface of the refrigerant device is covered with the second vibration isolating member, it is possible to reliably prevent a space from being formed in the gap between the side surface of the refrigerant device and the adjacent member.

In addition, according to the compressing device of the fourth aspect of the present disclosure, the intermediate layer having a higher rigidity than the second inner layer and the second outer layer is disposed in the second area from the lower end of the refrigerant device in the height direction to the first area. Therefore, the second vibration isolating member is positioned in the height direction with respect to the bottom surface on which the compressor is installed by the intermediate layer. In addition, the first vibration isolating member that comes into contact with the second vibration isolating member is also positioned in the height direction. Further, since the intermediate layer is disposed so as to cover only a portion of the side surface of the refrigerant device, the second vibration isolating member can be easily attached around the first vibration isolating member, as compared to a case where the intermediate layer is disposed so as to cover the entire periphery of the side surface of the refrigerant device.

According to a fifth aspect of the present disclosure, there is provided a vibration isolating member attachment method for attaching a vibration isolating member to a refrigerant device including a compressor accommodated in a compressing device. The compressing device includes: a housing which has a space formed therein and in which a panel defining an end surface of the space in one direction is openable and closable; a refrigerant device that is accommodated in the space, is disposed at a position facing the panel, and includes the compressor compressing a refrigerant; and an adjacent member that is attached to the housing and is disposed to be adjacent to the refrigerant device with a gap interposed between the adjacent member and the refrigerant device in a horizontal direction. The vibration isolating member attachment method includes: a first attachment step of attaching a first vibration isolating member to an area from a lower end to an upper end of the compressor in a height direction so as to cover an entire periphery of the compressor to come into contact with at least a portion of a side surface of the compressor; and a second attachment step of attaching a second vibration isolating member to at least a portion of an area from a lower end to an upper end of the refrigerant device in the height direction so as to cover an entire periphery of the first vibration isolating member to come into contact with at least a portion of the first vibration isolating member. In the first attachment step, the first vibration isolating member is attached in a state of not being in contact with the adjacent member. In the second attachment step, the second vibration isolating member is attached so as to fill up the gap together with the first vibration isolating member in a state of being in contact with both the first vibration isolating member and the adjacent member.

According to the vibration isolating member attachment method of the fifth aspect of the present disclosure, the first vibration isolating member is attached to the area from the lower end to the upper end of the compressor in the height direction HD so as to cover the entire periphery of the compressor in a state of being in contact with at least a portion of the side surface of the compressor. Therefore, it is possible to appropriately prevent vibrations and noise during the operation of the compressor from being transmitted to the outside.

In addition, according to the vibration isolating member attachment method of the fifth aspect of the present disclosure, the second vibration isolating member is attached to at least a portion of the area from the lower end to the upper end of the refrigerant device in the height direction so as to cover the entire periphery of the first vibration isolating member in a state of being in contact with at least a portion of the first vibration isolating member. The second vibration isolating member is attached so as to fill up the gap between the side surface of the refrigerant device and the adjacent member together with the first vibration isolating member in a state of being in contact with both the first vibration isolating member and the adjacent member. Since the gap between the side surface of the refrigerant device and the adjacent member is filled with the first vibration isolating member and the second vibration isolating member, it is possible to appropriately prevent the refrigerant device including the compressor or the pipe connected to the refrigerant device from being damaged due to the occurrence of stress in the refrigerant device or the pipe caused by the displacement of the refrigerant device due to strong vibrations or impacts during transport.

### Reference Signs List

1 Air conditioner
2 Outdoor unit (compressing device)
3 Housing
3c Front panel
3g Partition wall (adjacent member)
3ga First partition wall
3gb Second partition wall
4 Compressor
4a Side surface
5 Outdoor heat exchanger
9 Refrigerant pipe
10 Fixing member (adjacent member)
11 Main accumulator
11a Side surface
12 Sub-accumulator
13, 14 Muffler
20 Refrigerant device
100 First vibration isolating member
110 First inner layer
120 First outer layer
200 Second vibration isolating member
210 Second inner layer
220 Second outer layer
230 Intermediate layer
AR1 First area
AR2 Second area
CA1 First circumferential direction area
CA2 Second circumferential direction area
CD Circumferential direction
CL1, CL2, CL3, CL4, CL5, CL6 Gap
HD Height direction
LD Longitudinal direction
S Space
S1 Heat exchanger room
S2 Machine room
Su Installation surface

## Claims

1. A compressing device comprising:
a housing (3) which has a space (S) formed therein and in which a panel (3c) defining an end surface of the space in one direction is openable and closable;
a refrigerant device (20) that is accommodated in the space, is disposed at a position facing the panel, and includes a compressor (4) compressing a refrigerant;
an adjacent member (3g,10) that is attached to the housing and is disposed to be adjacent to the refrigerant device with a gap (CL1, CL2, CL3) interposed between the adjacent member and the refrigerant device in a horizontal direction;
a first vibration isolating member (100) that is disposed in an area from a lower end to an upper end of the compressor (4) in a height direction (HD) so as to cover an entire periphery of the compressor in a state of being in contact with at least a portion of a side surface of the compressor (4), the first vibration isolating member (100) being formed into a sheet shape; and
a second vibration isolating member (200) that is disposed in at least a portion of an area from a lower end to an upper end of the refrigerant device (20) in the height direction (HD) so as to cover an entire periphery of the first vibration isolating member (100) in a state of being in contact with at least a portion of the first vibration isolating member, the second vibration isolating member (200) being formed into a sheet shape,
wherein the first vibration isolating member (100) is disposed in a state of not being in contact with the adjacent member (3g, 10), and
the second vibration isolating member (200) is disposed so as to fill up the gap together with the first vibration isolating member (100) in a state of being in contact with both the first vibration isolating member (100) and the adjacent member (3g, 10).

2. The compressing device according to claim 1,
wherein, in the second vibration isolating member (200), a first thickness in a first circumferential direction area in a circumferential direction surrounding a side surface of the refrigerant device (20) is different from a second thickness in a second circumferential direction area different from the first circumferential direction area in a state in which the second vibration isolating member is not disposed in the gap (CL1, CL2, CL3).

3. The compressing device according to claim 1 or 2,
wherein the first vibration isolating member (100) is configured by laminating a first inner layer (110) that is disposed in contact with the refrigerant device (20) and a first outer layer (120) that is disposed in contact with the first inner layer and the second vibration isolating member,
one of the first inner layer and the first outer layer is made of a rubber material, and
the other of the first inner layer and the first outer layer is made of a member having a lower rigidity than the rubber material.

4. The compressing device according to claim 1 or 2,
wherein the second vibration isolating member (200) is configured by laminating a second inner layer (210) that is disposed in contact with the first vibration isolating member (100), a second outer layer (220) that is disposed in contact with the adjacent member, and an intermediate layer (230) that is interposed between the second inner layer and the second outer layer,
the second inner layer and the second outer layer are disposed in a first area (AR1), which is a partial area in the height direction, so as to cover an entire periphery of the side surface of the refrigerant device (20), with the intermediate layer interposed therebetween, and
the intermediate layer has a higher rigidity than the second inner layer and the second outer layer and is disposed in a second area from the lower end of the refrigerant device in the height direction to the first area so as to cover only a portion of the side surface of the refrigerant device.

5. A vibration isolating member attachment method for attaching a vibration isolating member to a refrigerant device (20) including a compressor (4) accommodated in a compressing device, the compressing device including a housing (3) which has a space (S) formed therein and in which a panel (3c) defining an end surface of the space in one direction is openable and closable, a refrigerant device (20) that is accommodated in the space, is disposed at a position facing the panel, and includes the compressor compressing a refrigerant, and an adjacent member (3g,10) that is attached to the housing and is disposed to be adjacent to the refrigerant device with a gap (CL1, CL2, CL3) interposed between the adjacent member and the refrigerant device in a horizontal direction, the vibration isolating member attachment method comprising:
a first attachment step of attaching a first vibration isolating member (100) formed into a sheet shape to an area from a lower end to an upper end of the compressor in a height direction (HD) so as to cover an entire periphery of the compressor to come into contact with at least a portion of a side surface of the compressor; and
a second attachment step of attaching a second vibration isolating member (200) formed into a sheet shape to at least a portion of an area from a lower end to an upper end of the refrigerant device in the height direction (HD) so as to cover an entire periphery of the first vibration isolating member (100) to come into contact with at least a portion of the first vibration isolating member,
wherein, in the first attachment step, the first vibration isolating member (100) is attached in a state of not being in contact with the adjacent member (3g, 10), and
in the second attachment step, the second vibration isolating member (200) is attached so as to fill up the gap together with the first vibration isolating member (100) in a state of being in contact with both the first vibration isolating member (100) and the adjacent member (3g, 10).

## Patentansprüche

1. Verdichtungsvorrichtung, die Folgendes umfasst:
ein Gehäuse (3), das einen Raum (S) aufweist, der darin gebildet ist, und in dem ein Paneel (3c), das eine Endfläche des Raums in einer Richtung definiert, öffenbar und schließbar ist;
eine Kältemittelvorrichtung (20), die in dem Raum aufgenommen ist, ist in einer Position angeordnet, die dem Paneel zugewandt ist, und beinhaltet einen Verdichter (4), der ein Kältemittel verdichtet;
ein benachbartes Element (3g, 10), das am Gehäuse befestigt und derart angeordnet ist, dass es der Kältemittelvorrichtung mit einem Spalt (CL1, CL2, CL3) benachbart ist, der zwischen dem benachbarten Element und der Kältemittelvorrichtung in einer horizontalen Richtung angeordnet ist;
ein erstes Schwingungsisolierelement (100), das in einem Bereich von einem unteren Ende zu einem oberen Ende des Verdichters (4) in einer Höhenrichtung (HD) derart angeordnet ist, dass es eine gesamte Peripherie des Verdichters in einem Zustand abdeckt, in dem es mit mindestens einem Abschnitt einer Seitenfläche des Verdichters (4) in Kontakt ist, wobei das erste Schwingungsisolierelement (100) zu einer Plattenform gebildet ist; und
ein zweites Schwingungsisolierelement (200), das in mindestens einem Abschnitt eines Bereichs von einem unteren Ende zu einem oberen Ende der Kältemittelvorrichtung (20) in der Höhenrichtung (HD) derart angeordnet ist, dass es eine gesamte Peripherie des ersten Schwingungsisolierelements (100) in einem Zustand abdeckt, indem es mit mindestens einem Abschnitt des ersten Schwingungsisolierelements in Kontakt ist, wobei das zweite Schwingungsisolierelement (200) zu einer Plattenform gebildet ist,
wobei das erste Schwingungsisolierelement (100) in einem Zustand angeordnet ist, in dem es mit dem benachbarten Element (3g, 10) nicht den Kontakt ist, und
das zweite Schwingungsisolierelement (200) ist derart angeordnet, dass es zusammen mit dem ersten Schwingungsisolierelement (100) den Spalt in einem Zustand füllt, in dem es sowohl mit dem ersten Schwingungsisolierelement (100) als auch dem benachbarten Element (3g, 10) in Kontakt ist.

2. Verdichtungsvorrichtung nach Anspruch 1,
wobei sich eine erste Dicke in einem ersten Umfangsrichtungsbereich in einer Umfangsrichtung, der eine Seitenfläche der Kältemittelvorrichtung (20) umgibt, im zweiten Schwingungsisolierelement (200) in einem Zustand, in dem das zweite Schwingungsisolierelement nicht im Spalt (CL1, CL2, CL3) angeordnet ist, von einer zweiten Dicke in einem zweiten Umfangsrichtungsbereich unterscheidet, der sich vom ersten Umfangsrichtungsbereich unterscheidet.

3. Verdichtungsvorrichtung nach Anspruch 1 oder 2,
wobei das erste Schwingungsisolierelement (100) durch Laminieren einer ersten inneren Schicht (110), die mit der Kältemittelvorrichtung (20) in Kontakt angeordnet ist, und einer ersten äußeren Schicht (120), die mit der ersten inneren Schicht und dem zweiten Schwingungsisolierelement in Kontakt angeordnet ist, ausgelegt ist,
eine der ersten inneren Schicht und der ersten äußeren Schicht besteht aus einem Gummimaterial, und
die andere der ersten inneren Schicht und der ersten äußeren Schicht besteht aus einem Element mit einer geringeren Steifigkeit als das Gummimaterial.

4. Verdichtungsvorrichtung nach Anspruch 1 oder 2,
wobei das zweite Schwingungsisolierelement (200) durch Laminieren einer zweiten inneren Schicht (210), die mit dem ersten Schwingungsisolierelement (100) in Kontakt angeordnet ist, und einer zweiten äußeren Schicht (220), die mit dem benachbarten Element in Kontakt angeordnet ist, sowie einer Zwischenschicht (230), die zwischen die zweite innere Schicht und die zweite äußere Schicht eingefügt ist, ausgelegt ist,
die zweite innere Schicht und die zweite äußere Schicht sind in einem ersten Bereich (AR1), bei dem es sich um einen Teilbereich in der Höhenrichtung handelt, derart angeordnet, dass sie eine gesamte Peripherie der Seitenfläche der Kältemittelvorrichtung (20) abdecken, wobei die Zwischenschicht dazwischen eingefügt ist, und
die Zwischenschicht weist eine höhere Steifigkeit auf als die zweite innere Schicht und die zweite äußere Schicht und ist in einem zweiten Bereich vom unteren Ende der Kältemittelvorrichtung in der Höhenrichtung zum ersten Bereich derart angeordnet, dass nur ein Abschnitt der Seitenfläche der Kältemittelvorrichtung abgedeckt wird.

5. Schwingungsisolierelementbefestigungsverfahren zum Befestigen eines Schwingungsisolierelements an einer Kältemittelvorrichtung (20), die einen Verdichter (4) beinhaltet, der in einer Verdichtungsvorrichtung aufgenommen ist, wobei die Verdichtungsvorrichtung ein Gehäuse (3), das einen Raum (S) aufweist, der darin gebildet und in dem ein Paneel (3c), das eine Endfläche des Raums in einer Richtung definiert ist, öffenbar und schließbar ist, eine Kältemittelvorrichtung (20), die in den Raum aufgenommen ist, ist in einer Position angeordnet, die dem Paneel zugewandt ist, und beinhaltet den Verdichter, der ein Kältemittel verdichtet, sowie ein benachbartes Element (3g, 10) beinhaltet, das am Gehäuse befestigt und derart angeordnet ist, dass es der Kältemittelvorrichtung mit einem Spalt (CL1, CL2, CL3) benachbart ist, der zwischen dem benachbarten Element und der Kältemittelvorrichtung in einer horizontalen Richtung eingefügt ist, wobei das Schwingungsisolierelementbefestigungsverfahren Folgendes umfasst:
einen ersten Befestigungsschritt zum Befestigen eines ersten Schwingungsisolierelements (100), das zu einer Plattenform gebildet ist, an einem Bereich von einem unteren Ende und einem oberen Ende des Verdichters in einer Höhenrichtung (HD), derart, dass es eine gesamte Peripherie des Verdichters derart abdeckt, dass es mit mindestens einem Abschnitt einer Seitenfläche des Verdichters in Kontakt kommt; und
einen zweiten Befestigungsschritt zum Befestigen eines zweiten Schwingungsisolierelements (200), das zu einer Plattenform gebildet ist, an mindestens einem Abschnitt eines Bereichs von einem unteren Ende zu einem oberen Ende der Kältemittelvorrichtung in der Höhenrichtung (HD), derart, dass es eine gesamte Peripherie des ersten Schwingungsisolierelements (100) derart abdeckt, dass es mit mindestens einem Abschnitt des ersten Schwingungsisolierelements in Kontakt kommt,
wobei das erste Schwingungsisolierelement (100) im ersten Befestigungsschritt in einem Zustand befestigt wird, in dem es mit dem benachbarten Element (3g, 10) nicht in Kontakt ist, und
das zweite Schwingungsisolierelement (200) wird im zweiten Befestigungsschritt derart befestigt, dass es zusammen mit dem ersten Schwingungsisolierelement (100) den Spalt in einem Zustand füllt, in dem es sowohl mit dem ersten Schwingungsisolierelement (100) als auch dem benachbarten Element (3g, 10) in Kontakt ist.

## Revendications

1. Dispositif de compression comprenant :
un boîtier (3) qui a un espace (S) formé à l'intérieur de ce dernier et dans lequel un panneau (3c) définissant une surface d'extrémité de l'espace dans une direction peut s'ouvrir et se fermer ;
un dispositif réfrigérant (20) qui est logé dans l'espace, est disposé dans une position faisant face au panneau et comprend un compresseur (4) comprimant un réfrigérant ;
un élément adjacent (3g, 10) qui est fixé au boîtier et est disposé pour être adjacent au dispositif réfrigérant avec un interstice (CL1, CL2, CL3) intercalé entre l'élément adjacent et le dispositif réfrigérant dans une direction horizontale ;
un premier élément d'isolation de vibrations (100) qui est disposé dans une zone allant d'une extrémité inférieure à une extrémité supérieure du compresseur (4) dans une direction de hauteur (HD) afin de couvrir toute la périphérie du compresseur dans un état dans lequel il est en contact avec au moins une partie d'une surface latérale du compresseur (4), le premier élément d'isolation de vibrations (100) étant formé sous une forme de feuille ; et
un deuxième élément d'isolation de vibrations (200) qui est disposé dans au moins une partie d'une zone allant d'une extrémité inférieure à une extrémité supérieure du dispositif réfrigérant (20) dans la direction de hauteur (HD) afin de couvrir toute la périphérie du premier élément d'isolation de vibrations (100) dans un état dans lequel il est en contact avec au moins une partie du premier élément d'isolation de vibrations, le deuxième élément d'isolation de vibrations (200) étant formé dans une forme de feuille,
dans lequel le premier élément d'isolation de vibrations (100) est disposé dans un état dans lequel il n'est pas en contact avec l'élément adjacent (3g, 10), et
le deuxième élément d'isolation de vibrations (200) est disposé afin de remplir l'interstice conjointement avec le premier élément d'isolation de vibrations (100) dans un état dans lequel il est en contact à la fois avec le premier élément d'isolation de vibrations (100) et l'élément adjacent (3g, 10).

2. Dispositif de compression selon la revendication 1,
dans lequel, dans le deuxième élément d'isolation de vibrations (200), une première épaisseur dans une première zone de direction circonférentielle, dans une direction circonférentielle entourant une surface latérale du dispositif réfrigérant (20), est différente d'une deuxième épaisseur dans une deuxième zone de direction circonférentielle différente de la première zone de direction circonférentielle dans un état dans lequel le deuxième élément d'isolation de vibrations n'est pas disposé dans l'interstice (CL1, CL2, CL3).

3. Dispositif de compression selon la revendication 1 ou 2,
dans lequel le premier élément d'isolation de vibrations (100) est configuré en déposant en couche une première couche interne (110) qui est disposée en contact avec le dispositif réfrigérant (20) et une première couche externe (120) qui est disposée en contact avec la première couche interne et le deuxième élément d'isolation de vibrations,
l'une parmi la première couche interne et la première couche externe est réalisée avec un matériau en caoutchouc, et
l'autre parmi la première couche interne et la première couche externe est réalisée avec un élément qui présente une rigidité inférieure par rapport au matériau en caoutchouc.

4. Dispositif de compression selon la revendication 1 ou 2,
dans lequel le deuxième élément d'isolation de vibrations (200) est configuré en déposant en couche une deuxième couche interne (210) qui est disposée en contact avec le premier élément d'isolation de vibrations (100), une deuxième couche externe (220) qui est disposée en contact avec l'élément adjacent, et une couche intermédiaire (230) qui est intercalée entre la deuxième couche interne et la deuxième couche externe,
la deuxième couche interne et la deuxième couche externe sont disposées dans une première zone (AR1), qui est une zone partielle dans la direction de hauteur, afin de couvrir toute la périphérie de la surface latérale du dispositif réfrigérant (20), avec la couche intermédiaire intercalée entre elles, et
la couche intermédiaire a une rigidité supérieure par rapport à la deuxième couche interne et à la deuxième couche externe et est disposée dans une deuxième zone allant de l'extrémité inférieure du dispositif réfrigérant dans la direction de hauteur à la première zone afin de ne couvrir qu'une partie de la surface latérale du dispositif réfrigérant.

5. Procédé de fixation d'élément d'isolation de vibrations pour fixer un élément d'isolation de vibrations à un dispositif réfrigérant (20) comprenant un compresseur (4) logé dans un dispositif de compression, le dispositif de compression comprenant un boîtier (3) qui a un espace (S) formé à l'intérieur de ce dernier et dans lequel un panneau (3c) définissant une surface d'extrémité de l'espace dans une direction qui peut s'ouvrir et se fermer, un dispositif réfrigérant (20) qui est logé dans l'espace, est disposé dans une position faisant face au panneau, et comprend le compresseur comprimant un réfrigérant, et un élément adjacent (3g, 10) qui est fixé au boîtier et est disposé pour être adjacent au dispositif réfrigérant avec un interstice (CL1, CL2, CL3) intercalé entre l'élément adjacent et le dispositif réfrigérant dans une direction horizontale, le procédé de fixation d'élément d'isolation de vibrations comprenant :
une première étape de fixation pour fixer un premier élément d'isolation de vibrations (100) formé selon une forme de feuille à une zone allant d'une extrémité inférieure à une extrémité supérieure du compresseur dans une direction de hauteur (HD) afin de couvrir toute la périphérie du compresseur pour venir en contact avec au moins une partie d'une surface latérale du compresseur ; et
une deuxième étape de fixation pour fixer un deuxième élément d'isolation de vibrations (200) formé selon une forme de feuille à au moins une partie d'une zone allant d'une extrémité inférieure à une extrémité supérieure du dispositif réfrigérant dans la direction de hauteur (HD) afin de couvrir toute la périphérie du premier élément d'isolation de vibrations (100) pour venir en contact avec au moins une partie du premier élément d'isolation de vibrations,
dans lequel, à la première étape de fixation, le premier élément d'isolation de vibrations (100) est fixé dans un état dans lequel il n'est pas en contact avec l'élément adjacent (3g, 10), et
à la deuxième étape de fixation, le deuxième élément d'isolation de vibrations (200) est fixé afin de remplir l'interstice conjointement avec le premier élément d'isolation de vibrations (100) dans un état dans lequel il est en contact à la fois avec le premier élément d'isolation de vibrations (100) et l'élément adjacent (3g, 10).
